# EUROPÄISCHE PATENTSCHRIFT

(11) **EP 0 923 433 B1**
(45) Veröffentlichungstag und Bekanntmachung des Hinweises auf die Patenterteilung: **13.06.2001**
(21) Anmeldenummer: 98924094.0
(22) Anmeldetag: 02.04.1998
(51) Int. Cl.: B27G 13/10, B27G 13/12

(54) **FRÄSWERKZEUG ZUR BEARBEITUNG VON WERKSTÜCKEN AUS HOLZ, EINEM HOLZWERKSTOFF, EINEM KUNSTSTOFF ODER DERGLEICHEN**
MILLING TOOL FOR MACHINING WORKPIECES MADE OF WOOD, A WOOD SUBSTANCE, PLASTIC OR THE LIKE
OUTIL DE FRAISAGE POUR L'USINAGE DE PIECES EN BOIS, EN MATERIAU DERIVE DU BOIS, EN MATERIAU SYNTHETIQUE OU SIMILAIRE

(30) Priorität: 12.04.1997 DE 29706589 U; 12.03.1998 DE 29804413 U
(43) Veröffentlichungstag der Anmeldung: 23.06.1999
(73) Patentinhaber: Ledermann GmbH, 72160 Horb (DE)
(72) Erfinder: GITTEL, Hans-Jürgen, D-72108 Rottenburg (DE); WENDEL, Pascal, F-67160 Altenstadt (FR)
(74) Vertreter: Riedel, Peter, Dipl.-Ing.
(86) Internationale Anmeldenummer: EP9801911
(87) Internationale Veröffentlichungsnummer: WO9846402

(56) Entgegenhaltungen:
- EP-A- 0 449 253
- DE-A- 2 306 010
- DE-A- 4 325 999
- DE-U- 9 414 327
- DE-U- 29 504 295
- DE-U- 29 608 603

## Beschreibung

Die Erfindung betrifft ein Fräswerkzeug zur Bearbeitung von Werkstücken aus Holz, einem Holzwerkstoff, einem Kunststoff oder dergleichen der im Oberbegriff des Anspruchs 1 angegebenen Gattung.

Es sind Fräswerkzeuge mit auswechselbaren Schneidplatten bekannt, die durch eine oder mehrere Schrauben am Werkzeuggrundkörper befestigt werden. Der Werkzeuggrundkörper weist pro Schneidplatte eine L-förmige Aussparung auf, die den Plattensitz bildet, in den die Schneidplatte eingelegt wird. Dabei liegt die Schneidplatte am Grund der Aussparung auf und ist auf diese Weise in radialer Richtung positioniert. Durch eine in der Schneidplatte befindliche Bohrung ist eine Schraube gesteckt, welche in ein Gewinde einer sich im Werkzeuggrundkörper befindlichen Bohrung geschraubt ist, wobei der Schraubenkopf gegen die Schneidplatte und die Schneidplatte gegen den Werkzeuggrundkörper drückt.

Die DE 43 25 999 beschreibt ein Werkzeug zur Metallbearbeitung, das als Fräswerkzeug ausgebildet ist. Dieses Werkzeug wird im wesentlichen aus einem eine Aufnahme und Schneiden umfassenden Tragteil gebildet. Es sind mehrere auswechselbare Schneidplatten in dem Schneidenteil aufgenommen, welche an diesem mit einer Schraube fixiert sind. Das Schneidenteil weist eine Ausnehmung zur Aufnahme der Schneidplatten auf, und in den Ausnehmungen sind Bohrungen vorgesehen, die von der Anlagefläche in den Schneidenteil führen. Diese Bohrung dient zur Aufnahme der Schraube, die zum Befestigen der Schneidplatte gegen die Anlagefläche in ein Gewinde schraubbar ist. Die Schraube weist einen Führungsschaft auf, der die Schneidplatte in einer Aufnahmeöffnung durchdringt und bis zu einem Abschnitt der im Schneidenteil befindlichen Bohrung ragt, wobei dieser Abschnitt bezogen auf den Führungsschaft als Spielpassung ausgeführt ist. Bei dieser Anordnung liegt die Schneidplatte im Plattensitz des Grundkörpers und am Kopf der Schraube formschlüssig an, so daß die Fertigungstoleranzen des Plattensitzes und der Schraube nur durch eine Verformung der Schraube ausgeglichen werden können. Dies ist ausschließlich bei relativ niedrigen Drehzahlen bzw. Massen, also kinetischen Energien der Schneidplatten möglich, so daß ein derartiges System zwar bei Metallbearbeitungswerkzeugen realisierbar, nicht jedoch für die Holzbearbeitung zu benutzen ist.

Zur Bearbeitung von Holz, Holzwerkstoffen oder Kunststoffen werden vorzugsweise Schneidplatten aus Hartmetall eingesetzt. Die Schneidplattenrohlinge werden bereits mit den Aufnahmebohrungen für die Befestigungsschrauben versehen. Diese Schneidplattenrohlinge werden gesintert und anschließend bearbeitet, so daß sie den gebrauchsfertigen Zustand erhalten. Bei dem Sintervorgang reduziert sich das Volumen der Schneidplattenrohlinge um bis zu 20%. Dies hat zur Folge, daß sich auch Formänderungen im Bereich der Aufnahmebohrungen ergeben. Um diese Änderungen auszugleichen, werden die Maße der Aufnahmebohrungen grob toleriert.

Wie bereits vorstehend beschrieben, werden die Schneidplatten mittels Schrauben im Werkzeuggrundkörper befestigt. Dabei ist wegen der Bohrungstoleranzen der Schneidplatten sowie der Schraubentoleranzen ein relativ großes Spiel gegeben. Die Fixierung der Schneidplatte erfolgt somit durch die mittels der vom Schraubenkopf aufgebrachten Reibkraft. Hierfür werden vorzugsweise Linsenkopfschrauben mit einem Gewinde der Größe M3 bis M4 eingesetzt. Solche Schrauben können somit nur mit einem vergleichsweise geringen Anzugsmoment angezogen werden, was zur Folge hat, daß die resultierende Reibkraft zwischen Schraubenkopf und Schneidplattenfläche ebenfalls gering ist. Damit im betrieblichen Einsatz des Werkzeugs die auftretenden Fliehkräfte die Größe der Haftreibung nicht überschreiten, können somit nur entsprechend begrenzte Schnittgeschwindigkeiten gefahren werden. Sofern die auftretenden Fliehkräfte die Haftreibung überwinden, führt dies dazu, daß die Schneidplatten sich nach außen verschieben oder sogar radial beschleunigt werden, bis der Rand der Aufnahmebohrung gegen den Schraubenschaft prallt. Der Flugkreisdurchmesser der Schneidplatte vergrößert sich undefiniert mit der Folge, daß bei einem mehrschneidigen Werkzeug nur eine Schneide zum Einsatz kommt bzw. bei sich ergänzenden Schneidplatten ein Versatz entsteht.

Der vorliegenden Erfindung liegt die Aufgabe zugrunde, ein Fräswerkzeug der im Oberbegriff des Anspruchs 1 genannten Gattung zu schaffen, bei dem die Schneidplatte mit einfach gestalteten Befestigungsmitteln auch bei hoher Beanspruchung und großen Fliehkräften stets sicher an dem Schneidenteil gehalten wird.

Diese Aufgabe wird durch ein Fräswerkzeug zur Bearbeitung von Werkstücken aus Holz, einem Holzwerkstoff, einem Kunststoff oder dergleichen mit den Merkmalen des Anspruchs 1 gelöst.

Die wesentlichen Vorteile der Erfindung sind darin zu sehen, daß das Fräswerkzeug wesentlich höhere Anforderungen an die Sicherheit erfüllt und daß die Schnittgeschwindigkeit wesentlich gesteigert wird. Beim Auswechseln der Platte sind lediglich die Schrauben einzudrehen und festzuziehen, ein zusätzliches Justieren zum erreichen der Profilgenauigkeit ist nicht erforderlich.

Das erfindungsgemäße Fräswerkzeug ermöglicht Umfangsgeschwindigkeiten bis zu 80 m/sec. Da die Befestigungschrauben die Schneidplatten nicht quer zur Schraubenlängsachse belasten, ist die Schneidplatte reibschlüssig am Aufnahmeteil gehalten, eine Biegeverformung der Befestigungsschraube ist ausgeschlossen. Die Befestigungsschrauben sind ausschließlich auf Zug belastet. Nur wenn der Reibschluß überwunden wird, beispielsweise infolge Überlastung, geht der Reibschluß in einen durch den Führungsschaft gegebenen Formschluß über, der die Schneidplatte auch in einem solchen Fall sicher hält.

Die Schraube weist mindestens eine Kerbe auf, bevorzugt wird jedoch auf jeder Seite des Führungsschaftes eine Kerbe vorgesehen. Dabei ist zwischen Kopf und Führungsschaft eine Ringkerbe angeordnet, die verhindert, daß Kerbspannungen am Übergang zwischen dem Kopf der Schraube und dem Führungsschaft auftreten, und durch die dem Kopf benachbarte Anordnung des Führungsschaftes ist sichergestellt, daß ein Abschnitt des Führungsschaftes innerhalb der Schneidplatte oder der Stützplatte liegt. Auf diese Weise können die Toleranzen in radialer Richtung minimiert werden. Zwischen einem Gewindeabschnitt der Schraube und dem Führungsschaft ist eine ringförmige Kerbe angeordnet. Durch diese Kerbe entsteht zwischen dem Führungsschaft und dem Gewindeabschnitt ein Bereich mit größerer Elastizität, in dem die gesamte Verformung infolge der unterschiedlich wirkenden Kräfte im Gewindeabschnitt und an dem Kopf aufgenommen wird. Für den Fall einer überbeanspruchung der Schraube stellt die Kerbe eine definierte und berechenbare Sollbruchstelle dar, so daß der Führungsschaft selbst im Falle der Überbeanspruchung der Schraube in Zugkraftrichtung weiterhin mit dem Kopf der Schraube verbunden bleibt.

Da vorzugsweise das Längen/Durchmesser-Verhältnis der Passung zwischen dem Führungsschaft und dem Abschnitt der Bohrung derart bemessen ist, daß bei Einwirkung von Querkräften ein Verkeilen des Führungsschaftes in der Bohrung erfolgt, wird bei rotierendem Fräswerkzeug und der demzufolge einwirkenden Fliehkraft der Führungsschaft innerhalb der Bohrung gehalten, so daß die Schneidplatte sich nicht lösen kann. Als ausreichende Länge der Passung zwischen Führungsschaft und dem betreffenden Abschnitt der Bohrung wird eine axiale Erstreckung des Führungsschaftes innerhalb der Bohrung angesehen, die mindestens 1/3 des Durchmessers des Führungsschaftes beträgt.

Die Aufnahmeöffnung in der Schneidplatte weist vorzugsweise eine Wandung auf, die orthogonal zur Anlagefläche verläuft, so daß bei Wirksamwerden des Formschlusses eine flächige Anlage der Schneidplatte an dem Führungsschaft gegeben ist. Außerdem ist die Aufnahmeöffnung in der Schneidplatte so gestaltet, daß sie an ihrem dem Kopf der Schraube zugewandten Ende einen Querschnitt aufweist, der in jeder Erstreckung geringer ist als die dem Führungsschaft benachbarte Seite des Kopfes der Schraube. Dadurch ist sichergestellt, daß der Schraubenkopf sich großflächig auf der Ebene rund um die Aufnahmeöffnung an der Schneidplatte abstützt. Die Querschnittsform der Aufnahmeöffnungen kann ein Kreis oder ein Langloch sein.

Die Aufnahmeöffnung in der Schneidplatte ist vorzugsweise derart bemessen oder positioniert, daß sie in radialer Richtung der Schneidplatte bezogen auf den Führungsschaft ein maximales Spiel von ca. 0,2 mm aufweist. Damit wird sichergestellt, daß selbst bei Überwinden der Haftreibung zwischen Schneidplatte und einer Anlagefläche der Ausnehmung im Schneidenteil der Schneidenflugkreis um höchstens 0,4 mm vergrößert wird. Eine darüber hinaus gehende Bewegung in radialer Richtung ist völlig ausgeschlossen.

Damit der durch die ringförmige Kerbe zwischen dem Gewindeabschnitt und dem Führungsschaft gebildete Bereich eine ausreichende Elastizität besitzt, ist es zweckmäßig, daß die Tiefe der Kerbe etwa 10% des Durchmessers des Führungsschaftes und die axiale Länge der Kerbe etwa 30% des Durchmessers beträgt.

Gemäß einer weiteren Ausführungsform der Erfindung ist zwischen der Anlagefläche und der Schneidplatte eine Stützplatte vorgesehen, deren Kontur vorzugsweise im Bereich des Schneidprofils mindestens annähernd der Form der Schneidplatte angepaßt ist.

In bevorzugter Ausgestaltung kann die Form der Außenkontur des Schneidenteils weitgehend der Form der Schneidkante der Schneidplatte entsprechen. Die Grundfläche, die zur Abstützung der Schneidplatte an deren radial innenliegendem Ende dient, besitzt vorzugsweise zwei Lagerstellen, die Grundfläche kann jedoch auch ebenflächig ausgebildet sein. Für die Herstellung bestimmter Profile ist es zweckmäßig, daß zwei Schneidplatten wechselseitig derart angeordnet sind, daß sich die Profile der Schneidplatten zu dem gewünschten Profil ergänzen.

Insbesondere bei Tragteilen aus Aluminiumwerkstoffen kann zur Erhöhung der Festigkeit des Innengewindes im Schneidenteil ein Gewindeeinsatz aus einem Werkstoff vorgesehen sein, der einer größeren Belastung standhält. Ein solcher Gewindeeinsatz ist vorzugsweise eine Einsatzfederspule, wie sie unter der Handelsbezeichnung "Helicoil" bekannt ist. Die Einsatzfederspule besteht aus einem kaltgewalzten, glatten Profildraht eines hochfesten CrNi-Stahls.

Ein Ausführungsbeispiel des erfindungsgemäßen Fräswerkzeugs ist nachstehend anhand der Zeichnung näher erläutert. In der Zeichnung zeigt:
- Fig. 1: eine perspektivische Ansicht eines Tragteils,
- Fig. 2: eine vergrößerte Darstellung einer Befestigungsschraube,
- Fig. 3: eine Seitenansicht eines Fräswerkzeugs mit profiliertem Schneidenteil,
- Fig. 4: einen Ausschnitt einer Schnittdarstellung des Tragteils mit eingebauter Schneidplatte,
- Fig. 5: die Darstellung eines Fräswerkzeugs, bei dem sich die Schneidplatten zu einem Profil ergänzen,
- Fig. 6: eine vergrößerte Darstellung einer Seitenansicht der Befestigungsschraube,
- Fig. 7: eine Schneidplatte als Einzelteil,
- Fig. 8: eine Ausführungsvariante der Fig. 4.

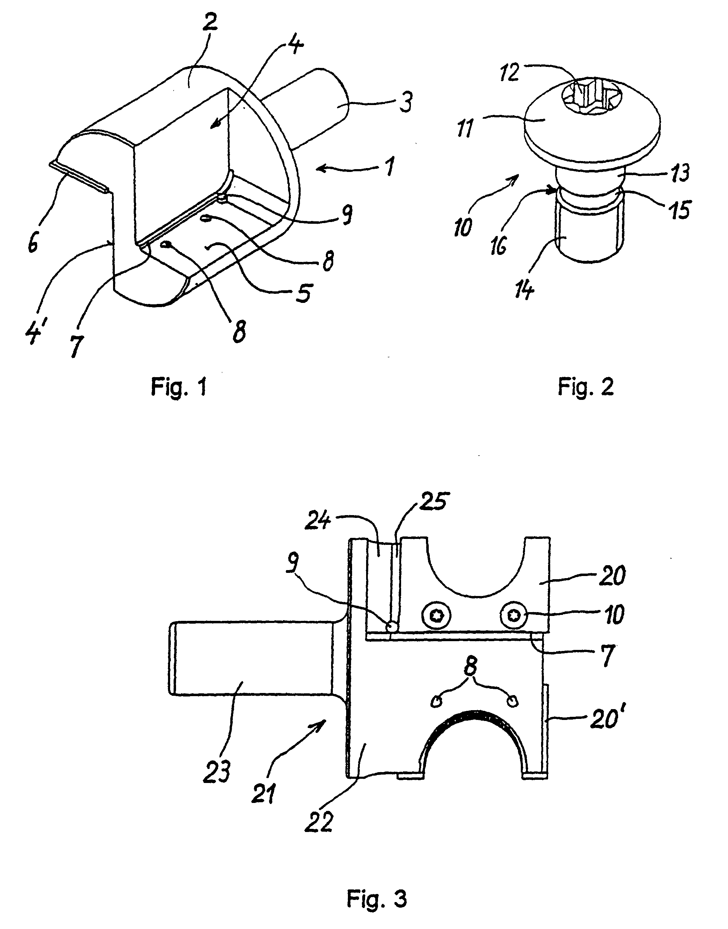

In Fig. 1 ist ein Tragteil 1 dargestellt, das ein Schneidenteil 2 und ein Aufnahmeteil 3 umfaßt. Das Schneidenteil 2 hat im wesentlichen die Außenkontur eines Zylinders mit Ausnehmungen 4, 4', die jeweils von im wesentlichen rechtwinklig zueinander verlaufenden Flächen begrenzt werden. Die Ausnehmungen 4, 4' weisen jeweils eine Anlagefläche 5 für eine Schneidplatte 6 auf, wobei in Fig. 1 lediglich die der Ausnehmung 4' zugeordnete Schneidplatte 6 dargestellt ist. In der Ausnehmung 4 ist die Schneidplatte zum Zweck der Darstellung der Anlagefläche 5 sowie einer an deren radial inneren Ende befindliche Grundfläche 7 sowie Bohrungen 8 und einem Anschlagelement 9 fortgelassen. Das Anschlagelement 9 dient zur Bestimmung der Schneidplattenlage in axialer Richtung, wohingegen die Grundfläche 7 als radialer Anschlag für die Schneidplatte dient. Die von der Anlagefläche 5 in den Körper des Schneidenteils 2 führenden Bohrungen 8 sind vorzugsweise mit einem Gewinde versehen und dienen zur Aufnahme von Befestigungsschrauben, die die Schneidplatte gegen die Anlagefläche 5 des Schneidenteils 2 pressen.

Die Fig. 2 zeigt eine Schraube 10 zur Befestigung von Schneidplatten an dem Schneidenteil eines Tragteils, wobei die Schraube 10 zur deutlicheren Darstellung stark vergrößert wiedergegeben ist. Die Schraube 10 besitzt einen Kopf 11, der nach Art eines Linsenkopfes gestaltet ist, mit einer stirnseitigen Öffnung 12 zum Eingriff eines Schraubendrehers für die Montage bzw. Demontage der Schneidplatte. An den Kopf 11 schließt sich ein Führungsschaft 13 an, der eine bestimmte axiale Länge aufweist, an den sich schließlich ein Gewindeabschnitt 14 anschließt. Zwischen dem Gewindeabschnitt 14 und dem Führungsschaft 13 ist eine ringförmige Kerbe 15 vorgesehen, durch die zwischen dem Führungsschaft 13 und dem Gewindeabschnitt 14 ein Bereich 16 geschaffen ist, der aufgrund seiner Elastizität die infolge unterschiedlicher Krafteinwirkung auf den Kopf 11 und den Gewindeabschnitt 14 auftretenden Verformungen aufnimmt. Der Gewindeabschnitt 14 ist zweckmäßigerweise mit einem Gewinde der Größe M3 bis M5 versehen.

Die Fig. 3 zeigt die Seitenansicht eines mit zwei Schneidplatten 20, 20' bestückten Tragteils 21, das ebenso wie die zuvor beschriebene Ausführung ein Schneidenteil 22 und ein Aufnahmeteil 23 umfaßt. Das Schneidenteil 22 besitzt eine der Profilierung der Schneidplatten 20, 20' entsprechende Profilierung, so daß die Schneidplatten 20, 20' lediglich bezüglich der Schneide selbst über die Kontur des Schneidenteils 22 herausragen. In dem Schneidenteil 22 sind im unteren Bereich die rückwärtigen Öffnungen der Bohrungen 8 zu sehen. Im oberen Bereich des Schneidenteils 22 befindet sich eine Ausnehmung 24 mit einer Anlagefläche 25, an der die Schneidplatte 20 abgestützt ist. Die Schneidplatte 20 liegt mit ihrer radial inneren Begrenzung an der Grundfläche 7 an und zur axialen Positionierung liegt die Schneidplatte 20 mit ihrer linken Seite an dem Anschlagelement 9. Die Schneidplatte 20 ist mittels Schrauben 10 an dem Schneidenteil 22 befestigt, wobei die Schrauben 10 denjenigen entsprechen, die im Fig. 2 näher beschrieben sind.

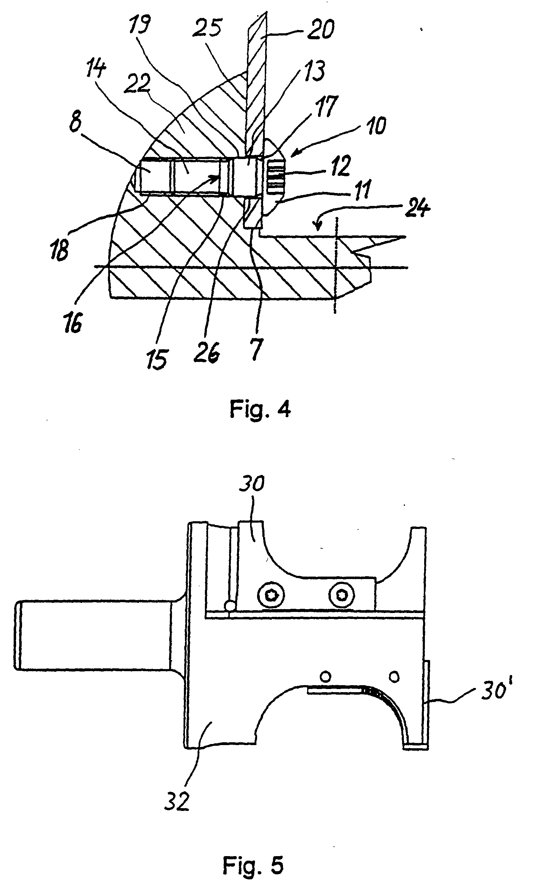

In der Fig. 4 ist ein partieller Schnitt durch den Schneidenteil 22 gezeigt. Daraus ist ersichtlich, daß die Bohrung 8 mit einem Innengewinde 18 versehen ist. Der Anlagefläche 25 benachbart befindet sich ein Abschnitt 19 der Bohrung 8 mit glatter Innenwandung, die als enge Spielpassung für den an der Schraube 10 vorgesehenen Führungsschaft 13 ausgeführt ist. Als Beispiel einer bevorzugten Passung wird für den Abschnitt 19 und den Führungsschaft 13 die Paarung H7/e8 angesehen. Es sind aber auch andere Passungen möglich. Zwischen dem Gewindeabschnitt 14 und dem Führungsschaft 13 befindet sich der durch die radiale Kerbe 15 gebildete Bereich 16. Zwischen dem Kopf 11 der Schraube 10 und dem Führungsschaft 13 ist eine Ringkerbe 17 vorgesehen. Die Schneidplatte 20 besitzt eine Öffnung 26, durch welche die Schraube 10 geführt ist. Dabei liegt der Führungsschaft 13 innerhalb der Öffnung 26 und ragt zumindest über mehr als die Hälfte der Dicke der Schneidplatte 20 in diese hinein. Die Öffnung 26 weist lediglich ein geringes radiales Spiel zu dem Führungsschaft 13 auf, das beispielsweise 0,2 mm beträgt, es ist jedoch auch ein Spiel von 0,15 mm möglich. Geringere Toleranzen sind wegen der starken Schrumpfung des Materials beim Sintervorgang nicht zu erreichen.

Durch das Eindrehen der Schraube 10 in das Gewinde 18 der Bohrung 8 gelangt der Kopf 11 mit seiner der Schneidplatte 20 zugewandten Flachseite an die Schneidplatte 20 und preßt diese gegen die Anlagefläche 25. Dadurch kann mittels des Schraubenkopfes 11 eine derart große Anpresskraft auf die Schneidplatte 20 bzw. Anlagefläche 25 übertragen werden, die größer ist als die bei Rotation des Tragteils auf die Schneidplatte 20 wirkende Fliehkraft. übersteigt die Fliehkraft die mittels der Schraube 10 aufgebrachte Haftreibung zwischen Anlagefläche 25 und Schneidplatte 20, so kann die Schneidplatte 20 allenfalls um den Betrag des geringen Spiels zwischen dem Rand der Öffnung 26 und dem Führungsschaft radial verschoben werden. Eine weitere radiale Bewegung der Schneidplatte 20 wird zuverlässig dadurch verhindert, daß der Führungsschaft 13 in einer engen Spielpassung in dem Abschnitt 19 der Bohrung 8 liegt, so daß eine Auslenkung der Schraube 10 gegenüber deren Längsachse selbst bei großen Radialkräften verhindert wird. Es wird nämlich durch die Radialkräfte, die auf die Schneidplatte 20 wirken, eine Klemmkraft des Führungsschaftes 13 in dem Abschnitt 19 der Bohrung 8 erzeugt, die ein Lösen der Schraube 10 selbst in dem Fall, daß durch Überbeanspruchung die Schraube 10 im Bereich 16 reißt, verhindert wird.

Die Fig. 5 zeigt eine Ausführungsvariante des Fräswerkzeugs, bei der zwei in axialer Richtung gegeneinander versetzt angeordnete Schneidplatten 30, 30' an einem Schneidenteil 32 mittels Schrauben 10 befestigt sind. Die beiden Schneidplatten 30, 30' bilden gemeinsam das herzustellende Profil, das heißt, die beiden Schneidplatten 20, 20' ergänzen sich zu der gewünschten Kontur, die das Werkstück nach der Bearbeitung durch das Fräswerkzeug aufweisen soll.

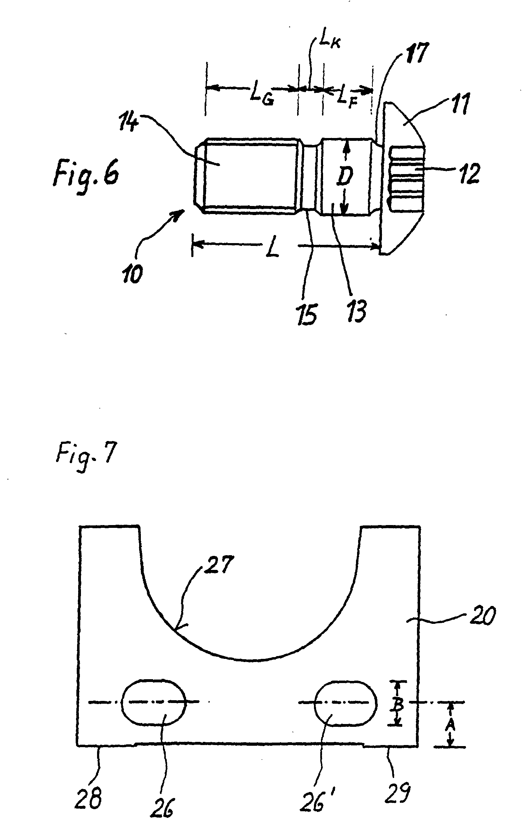

Die Fig. 6 zeigt die Schraube 10 in Seitenansicht in vergrößerter Darstellung. Daraus ist ersichtlich, daß die axiale Länge LG des Gewindeabschnitts 14 etwa der halben Länge L des aus Führungsschaft 13 und Gewindeabschnitt 14 einschl. der beiden Kerben 15 und 17 gebildeten Schraubenbolzens beträgt. Die axiale Länge L_{F} des Führungsschaftes 13 ist demgegenüber wesentlich geringer, wobei das Verhältnis von Länge L_{F} zum Durchmesser D des Führungsschaftes 13 etwa 1:2 beträgt. Die axiale Erstreckung des Führungsschaftes 13 innerhalb des Abschnitts 19 der Bohrung 8 sollte mindestens 1/3 des Durchmessers D des Führungsschaftes betragen. Die Tiefe der Kerbe 15 beträgt maximal 10% des Durchmessers D des Führungschaftes und die axiale Länge L_{K} der Kerbe 15 beträgt etwa 30% des Durchmessers D.

In Fig. 7 ist die Schneidplatte 20 als Einzelteil dargestellt. Diese Schneidplatte 20 besitzt ein etwa halbkreisförmiges Schneidprofil 27, so daß mit dieser Schneidplatte 20 das Gesamtprofil herstellbar ist. Entsprechend der Anordnung von Bohrungen im Schneidenteil besitzt die Schneidplatte 20 zwei Öffnungen 26, 26', deren Öffnungsquerschnitt in Fliehkraftrichtung möglichst dem Durchmesser des Führungsschaftes der Schrauben, die zur Befestigung der Schneidplatte an dem Schneidenteil dienen, angenähert ist. Diese Öffnungen 26, 26' sind in Fig. 7 als Langlöcher dargestellt, wobei die Erstreckung B der Weite in Fliehkraftrichtung entspricht.

An der der Grundfläche des Schneidenteils zugewandten Kante weist die Schneidplatte 20 zwei in einem Abstand angeordnete Lagerflächen 28, 29 auf. Die Mittelachsen der Öffnungen 26, 26' verlaufen in einem Abstand A zu den Lagerflächen 28, 29. Bei der Schneidplatte 20 sind die Maße A und B in wesentlich engeren Toleranzen festlegbar, wobei die Toleranzen nunmehr im Bereich von ±0,05 mm liegen können.

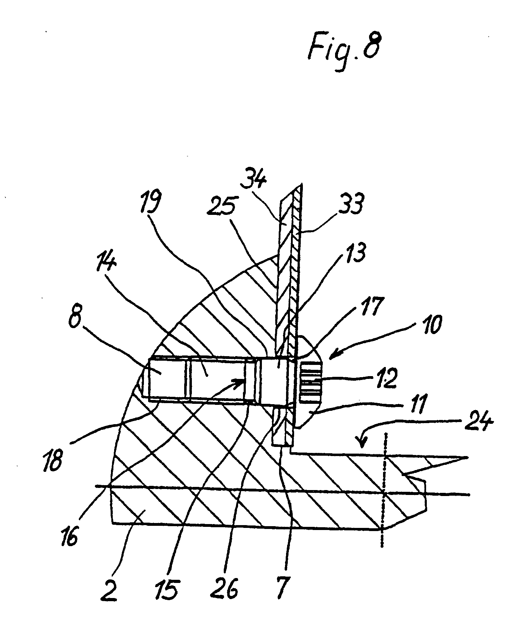

Die Fig. 8 zeigt eine Ausführungsvariante der Fig. 4, bei der der Schneidenteil 2 in der gleichen Weise gestaltet ist, wie in Fig. 1 gezeigt. In der Ausnehmung 24 ist an der Anlagefläche 25 eine Schneidplatte 33 mittels einer Stützplatte 34 abgestützt, wobei die Stützplatte 34 eine Kontur aufweist, die zumindest annähernd der Form der Schneidplatte entspricht. Diese angepaßte Form soll insbesondere im Bereich der Schneide gegeben sein. Zweck dieser Ausführungsform ist es, daß der Schneidenteil 2 mit unterschiedlichen Profilen bestückt werden kann, ohne daß dieser selbst geändert werden müßte. Da Schneidplatten mit kleinen Profilen sehr spröde sind, ist eine Abstützung notwendig, die durch die Abstützplatte 34 erreicht wird. Die Stützplatte 34 wird auf die gleiche Weise an dem Schneidenteil 2 formschlüssig fixiert, wie dies bei der in Fig. 4 beschriebenen Schneidplatte 20 der Fall ist.

In den vorstehenden Fig. 1, 3 und 5 ist das Aufnahmeteil 3 bzw. 23 als Schaft dargestellt. Alternativ hierzu kann als Aufnahmeteil in dem Schneidenteil 2 auch eine zentrische Bohrung vorgesehen sein, so daß das Tragteil 1, 21 auf eine Maschinenspindel aufsteckbar ist.

## Patentansprüche

1. Fräswerkzeug zur Bearbeitung von Werkstücken aus Holz, einem Holzwerkstoff, einem Kunststoff oder dergleichen, bei dem in einem ein Aufnahmeteil (3, 23) und ein Schneidenteil (2, 22) umfassenden Tragteil (1, 21) mindestens zwei auswechselbare Schneidplatten (6, 20, 20', 30, 30', 33) in dem Schneidenteil (2, 22) aufgenommen und an diesem mit mindestens je einer Schraube (10) fixiert sind, wobei das Schneidenteil (2, 22) Ausnehmungen (4, 4', 24) zur Aufnahme der Schneidplatten (6, 20, 20', 30, 30', 33) aufweist und mit mindestens je einer von einer Anlagefläche (5, 25) der Ausnehmung (4, 4', 24) in den Schneidenteil (2, 22) führenden Bohrung (8) zur Aufnahme der Schraube (10), die zum Anpressen der Schneidplatte (6, 20, 20', 30, 30', 33) gegen die Anlagefläche (5, 25) in ein Gewinde (18) schraubbar ist, und die Schraube (10) einen Führungsschaft (13) aufweist, der die Schneidplatte (6, 20, 20', 30, 30', 33) in einer Aufnahmeöffnung (26, 26') durchdringt und bis in einen Abschnitt (19) der im Schneidenteil befindlichen Bohrung (8) ragt, wobei dieser Abschnitt (19), bezogen auf den Führungsschaft (13) als enge Spielpassung ausgeführt ist,
dadurch gekennzeichnet, daß die Schraube (10) einen Kopf (11) mit einer parallel zur Anlagefläche (5, 25) ausgerichteten Spannfläche (11') aufweist und der Führungsschaft (13) der parallelen Anlagefläche (5, 25) des Kopfes (11) der Schraube (10) benachbart angeordnet und an den Führungsschaft (13) angrenzend mindestens eine Kerbe (15, 17) vorgesehen ist, und die Aufnahmeöffnung (26, 26') so bemessen ist, daß diese den Führungsschaft (13) mit geringem Spiel umgibt, und daß die Schraube (10) die Schneidplatte (6, 20, 30, 33) statisch genau bestimmt in Position hält und die Schraube (10) ausschließlich auf Zug belastet ist, und daß bei Verlust des Reibschlusses die Schneidplatte (6, 20, 30, 33) sich um maximal das geringe Spiel zwischen Führungsschaft (13) und Aufnahmeöffnung (26, 26') verlagern kann und die resultierenden Verformungen der Schraube (10) definiert in der mindestens einen Kerbe (15, 17) erfolgen.

2. Fräswerkzeug nach Anspruch 1,
dadurch gekennzeichnet, daß sowohl zwischen dem Kopf (11) der Schraube (10) und dem Führungsschaft (13) eine Ringkerbe (17) als auch zwischen dem Führungsschaft (13) und dem Gewindeabschnitt (14) der Schraube (10) eine Kerbe (15) vorgesehen ist.

3. Fräswerkzeug nach Anspruch 1 oder 2,
dadurch gekennzeichnet, daß die Tiefe der ringförmigen Kerbe (15) höchstens 10% des Durchmessers (D) des Führungsschaftes (13) beträgt und die axiale Länge (LK) der Kerbe etwa 30% des Durchmessers (D) des Führungsschaftes (13) beträgt.

4. Fräswerkzeug nach einem der Ansprüche 1 bis 3,
dadurch gekennzeichnet, daß der Querschnitt der Aufnahmeöffnung (26, 26') kreisförmig oder langlochförmig ist und vorzugsweise die Aufnahmeöffnung (26, 26') eine Wandung aufweist, die orthogonal zur Anlagefläche (25) verläuft.

5. Fräswerkzeug nach einem der Ansprüche 1 bis 4,
dadurch gekennzeichnet, daß die Aufnahmeöffnung (26, 26') an ihrem dem Kopf (11) der Schraube (10) zugewandten Ende einen Querschnitt aufweist, der in jeder Erstreckung geringer ist als die Fläche auf der dem Führungsschaft (13) benachbarten Seite des Kopfes (11).

6. Fräswerkzeug nach einem der Ansprüche 1 bis 5,
dadurch gekennzeichnet, daß das Längen/DurchmesserVerhältnis der Passung zwischen dem Führungsschaft (13) und dem Abschnitt (19) der Bohrung (8) derart bemessen ist, daß bei einer Verformung der Schraube (10) durch Einwirkung von Querkräften ein Verkeilen des Führungsschaftes (13) in der Bohrung (8) erfolgt.

7. Fräswerkzeug nach Anspruch 6,
dadurch gekennzeichnet, daß die axiale Erstreckung des Führungsschaftes (13) innerhalb der Bohrung (8) mindestens 1/3 des Durchmessers (D) des Führungsschaftes (13) beträgt.

8. Fräswerkzeug nach einem der Ansprüche 1 bis 7,
dadurch gekennzeichnet, daß die Aufnahmeöffnung (26,. 26') in der Schneidplatte (20) derart bemessen ist, daß sie in radialer Richtung der Schneidplatte (20), bezogen auf den Führungsschaft (13), ein maximales Spiel von ca. 0,2 mm aufweist.

9. Fräswerkzeug nach einem der Ansprüche 1 bis 8,
dadurch gekennzeichnet, daß an der Grundfläche (7) zwei Lagerstellen für die Schneidplatte (20, 20') ausgebildet sind oder die Grundfläche (7) ebenflächig ausgebildet ist.

10. Fräswerkzeug nach einem der Ansprüche 1 bis 9,
dadurch gekennzeichnet, daß zwei Schneidplatten (30, 30') wechselseitig derart angeordnet sind, daß sich die Profile der Schneidplatten (30, 30') ergänzen.

11. Fräswerkzeug nach einem der Ansprüche 1 bis 10,
dadurch gekennzeichnet, daß in der Ausnehmung (4, 4') eine Grundfläche (7) einen radialen Anschlag für die Schneidplatte (6, 20, 20', 30, 30', 33) bildet und ein Anschlagelement (9) zur Positionierung der Schneidplatte (6, 20, 20') in axialer Richtung vorgesehen ist.

12. Fräswerkzeug nach einem der Ansprüche 1 bis 11,
dadurch gekennzeichnet, daß zwischen der Anlagefläche (5, 25) und der Schneidplatte (20) eine Stützplatte (34) angeordnet ist.

13. Fräswerkzeug nach einem der Ansprüche 1 bis 12,
dadurch gekennzeichnet, daß die Kontur der Stützplatte (34) und/oder die Außenkontur des Schneidenteils insbesondere im Bereich des Schneidprofils mindestens annähernd der Form der Schneidplatte (33) angepaßt sind.

14. Fräswerkzeug nach einem der Ansprüche 1 bis 13,
dadurch gekennzeichnet, daß das Gewinde (18) im Schneidenteil (2, 22) durch einen Gewindeeinsatz gebildet ist, wobei vorzugsweise der Gewindeeinsatz eine Einsatzfederspule aus kaltgewalztem, glattem Profildraht eines hochfesten CrNi-Stahls ist.

15. Schneidplatte, insbesondere für ein Fräswerkzeug nach einem der Ansprüche 1 bis 14,
dadurch gekennzeichnet, daß die Schneidplatte (20) mit mindestens einer Öffnung (26, 26') versehen ist, die eine innere Weite (B) in Fliehkraftrichtung mit einer Toleranz von maximal 0,2 mm, vorzugsweise etwa ±0,05 mm aufweist.

16. Schneidplatte nach Anspruch 15,
dadurch gekennzeichnet, daß die Schneidplatte (20) mindestens eine Lagerfläche (28, 29) aufweist, und die Mittelachsen der Öffnungen (26, 26') in einem Abstand (A) zu der mindestens einen Lagerfläche (28, 29) mit einer Toleranz von höchstens 0,2 mm, vorzugsweise ca. ±0,,05 mm verlaufen.

## Claims

1. Milling tool for machining workpieces of wood, a derived timber product, a plastics material or similar, wherein at least two interchangeable cutting tips (6, 20, 20', 30, 30', 33) are received in a cutting part (2, 22) of a support (1, 21) comprising a receiving part (3, 23) and the cutting part (2, 22) and are attached thereto by means of at least one respective screw (10), the cutting part (2,22) having cutouts (4, 4', 24) for receiving the cutting tips (6, 20, 20',30, 30', 33) and at least one respective bore (8) extending from a bearing surface (5, 25) of the cutout (4, 4', 24) into the cutting part (2, 22) for receiving the screw (10) which can be screwed in a thread (18) in order to press the cutting tip (6, 20, 20', 30, 30', 33) against the bearing surface (5, 25), and wherein the screw (10) has a guide shaft (13) which penetrates a receiving orifice (26, 26') of the cutting tip (6, 20, 20', 30, 30', 33) and extends into a portion (19) of the bore (8) provided in the cutting part, this portion (19) being designed to have a narrow clearance fit relative to the guide shaft (13),
characterised in that the screw (10) has a head (11) with a clamping surface (11') extending parallel with the bearing surface (5, 25) and the guide shaft (13) is arranged adjacent to the parallel bearing surface (5, 25) of the head (11) of the screw (10), and at least one notch (15, 17) is provided adjacent to the guide shaft (13), and the receiving orifice (26, 26') is so dimensioned that it surrounds the guide shaft (13) with a slight clearance and the screw (10) holds the cutting tip (6, 20, 30, 33) statically in a precise position and the screw (10) is loaded by tensile force only and any loss in frictional force will result in a maximum displacement of the cutting tip (6, 20, 30, 33) equivalent to the small play between the guide shaft (13) and the receiving orifice (26, 26') and the resultant deformations of the screw (10) will occur in a defined manner in at least one notch (15, 17).

2. Milling tool according to claim 1,
characterised in that between the head (11) of the screw (10) and the guide shaft (13) an annular notch (17) and between the guide shaft (13) and the threaded portion (14) of the screw (10) a notch (15) are provided.

3. Milling tool according to claim 1 or 2,
characterised in that the depth of the annular notch (15) is at most 10% of the diameter (D) of the guide shaft (13) and the axial length (LK) of the notch is approximately 30% of the diameter (D) of the guide shaft (13).

4. Milling tool according to one of claims 1 to 3,
characterised in that the cross-section of the receiving orifice (26, 26') is circular or slot-shaped and the receiving orifice (26, 26') preferably has a wall extending perpendicular to the bearing surface (25).

5. Milling tool according to one of claims 1 to 4,
characterised in that the receiving orifice (26, 26') has, on its end facing the head (11) of the screw (10), a cross-section which is smaller in any extension than the surface of the side of the head (11) adjacent to the guide shaft (13).

6. Milling tool as claimed in one of claims 1 to 5,
characterised in that the length/diameter ratio of the fit between the guide shaft (13) and the portion (19) of the bore (8) is so dimensioned that if the screw (10) is deformed by the action of transverse forces, the guide shaft (13) will be wedged in the bore (8).

7. Milling tool according to claim 6,
characterised in that the axial extension of the guide shaft (13) within the bore (8) is at least 1/3 of the diameter (D) of the guide shaft (13).

8. Milling tool according to one of claims 1 to 7,
characterised in that the receiving orifice (26, 26') in the cutting tip (20) is so dimensioned that it has a maximum clearance of approximately 0.2 mm in the radial direction of the cutting tip (20) relative to the guide shaft (13).

9. Milling tool according to one of claims 1 to 8,
characterised in that two bearing positions are provided for the cutting tip (20, 20') in the base surface (7) or the base surface (7) is planar.

10. Milling tool according to one of claims 1 to 9,
characterised in that two cutting tips (30, 30') are arranged alternatingly such that the profiles of the cutting tips (30, 30') complement one another.

11. Milling tool according to one of claims 1 to 10,
characterised in that base surface (7) in the cutout (4, 4') forms a radial bearing for the cutting tip (6, 20, 20', 30, 30', 33) and an abutment element (9) is provided for positioning the cutting tip (6, 20, 20') in the axial direction.

12. Milling tool according to one of claims 1 to 11,
characterised in that a support plate (34) is arranged between the bearing surface (5, 25) and the cutting tip (20).

13. Milling tool according to one of claims 1 to 12,
characterised in that the contour of the support plate (34) and/or the outer contour of the cutting part at least substantially matches the shape of the cutting tip (33), especially in the area of the cutting profile.

14. Milling tool according to one of claims 1 to 13,
characterised in that the thread (18) in the cutting part (2, 22) is provided as a threaded insert, the threaded insert preferably being a spring coil insert made of cold-rolled, smooth profiled wire of a high-strength CrNi steel.

15. Cutting tip, in particular for a milling tool according to one of claims 1 to 14,
characterised in that the cutting tip (20) is provided with at least one orifice (26, 26') having an internal width (B) in the direction of centrifugal force with a tolerance of a maximum of 0.2 mm, preferably approximately ± 0.05 mm.

16. Cutting tip according to claim 15,
characterised in that the cutting tip (20) has at least one bearing surface (28, 29) and the central axes of the orifices (26, 26') extend at a distance (A) apart to the at least one bearing surface (28, 29) with a tolerance of at most 0.2 mm, preferably approximately ± 0.5 mm.

## Revendications

1. Outil de fraisage pour l'usinage de pièces en bois, en matériau dérivé du bois, en matériau synthétique ou similaire, dans le cas duquel, dans une pièce porteuse (1, 21) comportant une partie de réception (3, 23) et une partie de coupe (2, 22), au moins deux plaquettes de coupe (6, 20, 20', 30, 30', 33) échangeables sont reçues dans la partie de coupe (2, 22) et lui sont fixées par au moins chacune une vis (10), dans le cas duquel la partie de coupe (2, 22) présente des évidements (4, 4', 24) pour recevoir les plaquettes de coupe (6, 20, 20', 30, 30', 33) et comporte au moins chaque fois un perçage (8) qui va, d'une surface d'appui (5, 25) de l'évidement (4, 4', 24), dans la partie de coupe (2, 22) pour recevoir la vis (10) qui peut se visser dans un filetage (18) pour presser la plaquette de coupe (6, 20, 20', 30, 30', 33) contre la surface d'appui (5, 25), et dans le cas duquel la vis (10) présente un fût de guidage (13) qui traverse la plaquette de coupe (6, 20, 20', 30, 30', 33) dans une ouverture de passage (26, 26') et pénètre jusque dans un tronçon (19) du perçage (8) qui se trouve dans la partie de coupe, ce tronçon (19) étant réalisé à ajustement à faible jeu avec le fût de guidage (13),
caractérisé par le fait que la vis (10) présente une tête (11) à surface de serrage (11') orientée parallèlement à la surface d'appui (5, 25) et que le fût de guidage (13) est disposé près de la surface d'appui parallèle (5, 25) de la tête (11) de la vis (10) et que, jouxtant le fût de guidage (13), est prévue au moins une entaille (15, 17) et que l'ouverture de réception (26, 26') est dimensionnée de façon à entourer avec un faible jeu le fût de guidage (13) et que la vis (10) maintient la plaquette de coupe (6, 20, 30, 33) dans une position statique exactement déterminée et que la vis (10) est exclusivement chargée en traction et que, en cas de perte de la fixation par frottement, la plaquette de coupe (6, 20, 30, 33) ne peut se déplacer au maximum que du faible jeu existant entre le fût de guidage (13) et l'ouverture de réception (26, 26') et que les déformations de la vis (10) qui en résultent se font de façon définie dans l'entaille dont il y a au moins une (15, 17).

2. Outil de fraisage selon la revendication 1,
caractérisé par le fait qu'une entaille annulaire (17) est prévue entre la tête (11) de la vis (10) et le fût de guidage (13) aussi bien qu'une entaille (15) l'est entre le fût de guidage (13) et le tronçon fileté (14) de la vis (10).

3. Outil de fraisage selon la revendication 1 ou 2,
caractérisé par le fait que la profondeur de l'entaille annulaire (15) vaut au maximum 10 % du diamètre (D) du fût de guidage (13) et que la longueur axiale (L_{K}) de l'entaille vaut environ 30 % du diamètre (D) du fût de guidage (13).

4. Outil de fraisage selon l'une des revendications 1 à 3,
caractérisé par le fait que la section de l'ouverture de réception (26, 26') a la forme d'un cercle ou d'une lumière et que de préférence l'ouverture de réception (26, 26') présente une paroi orientée orthogonalement par rapport à la surface d'appui (25).

5. Outil de fraisage selon l'une des revendications 1 à 4,
caractérisé par le fait qu'à son extrémité orientée vers la tête (11) de la vis (10), l'ouverture de réception (26, 26') présente une section qui, dans toute extension, est inférieure à la surface de la face de la tête (11) voisine du fût de guidage (13).

6. Outil de fraisage selon l'une des revendications 1 à 5,
caractérisé par le fait que le rapport longueur/diamètre de l'ajustement entre le fût de guidage (13) et le tronçon (19) du perçage (8) est dimensionné de façon qu'en cas de déformation de la vis (10) sous l'action de forces transversales, il se produise un coincement du fût de guidage (13) dans le perçage (8).

7. Outil de fraisage selon la revendication 6,
caractérisé par le fait que l'extension axiale du fût de guidage (13) à l'intérieur du perçage (8) vaut au moins 1/3 du diamètre (D) du fût de guidage (13).

8. Outil de fraisage selon l'une des revendications 1 à 7,
caractérisé par le fait que l'ouverture de réception (26, 26') prévue dans la plaquette de coupe (20) est dimensionnée de façon que, selon la direction radiale de la plaquette de coupe (20), elle présente un jeu maximal d'environ 0,2 mm avec le fût de guidage (13).

9. Outil de fraisage selon l'une des revendications 1 à 8,
caractérisé par le fait que sur la surface de base (7) sont formées deux positions de butée pour la plaquette de coupe (20, 20') ou bien que la surface de base (7) est conçue plane sur toute la surface.

10. Outil de fraisage selon l'une des revendications 1 à 9,
caractérisé par le fait que deux plaquettes de coupe (30, 30') sont alternativement disposées de façon que les profils des plaquettes de coupe (30, 30') se complètent.

11. Outil de fraisage selon l'une des revendications 1 à 10,
caractérisé par le fait que dans l'évidement (4, 4') une surface de base (7) forme une butée radiale pour la plaquette de coupe (6, 20, 20', 30, 30', 33) et qu'un élément de butée (9) est prévu pour le positionnement de la plaquette de coupe (6, 20, 20') selon la direction axiale.

12. Outil de fraisage selon l'une des revendications 1 à 11,
caractérisé par le fait qu'entre la surface d'appui (5, 25) et la plaquette de coupe (20) est disposée une plaquette de soutien (34).

13. Outil de fraisage selon l'une des revendications 1 à 12,
caractérisé par le fait que le contour de la plaquette de soutien (34) et/ou le contour extérieur de la partie de coupe, en particulier dans la zone du profil de coupe, sont au moins approximativement adaptés à la forme de la plaquette de coupe (33).

14. Outil de fraisage selon l'une des revendications 1 à 13,
caractérisé par le fait que le filetage (18) prévu dans la partie de coupe (2, 22) est formé par une garniture filetée insérée, la garniture filetée insérée étant de préférence une bobine élastique d'un fil profilé laminé à froid, lisse, en acier CrNi à haute résistance.

15. Plaquette de coupe, en particulier pour un outil de fraisage selon l'une des revendications 1 à 14,
caractérisé par le fait que la plaquette de coupe (20) comporte au moins une ouverture (26, 26') qui présente, selon la direction de la force centrifuge, une largeur intérieure (B) d'une tolérance d'au maximum 0,2 mm, de préférence environ ± 0, 05 mm.

16. Plaquette de coupe selon la revendication 15,
caractérisé par le fait que la plaquette de coupe (20) présente au moins une surface de butée (28, 29) et que les axes des ouvertures (26, 26') sont à une distance (A) de la surface de butée (28, 29), dont il y a au moins une, sur laquelle la tolérance est d'au maximum 0,2 mm, de préférence environ ± 0, 05 mm.
